# FASCICULE DE BREVET EUROPEEN

(11) **EP 3 594 508 B1**
(45) Date de publication et mention de la délivrance du brevet: **08.09.2021**
(21) Numéro de dépôt: 19184498.4
(22) Date de dépôt: 04.07.2019
(51) Int. Cl.: F15B 11/00

(54) **CIRCUIT HYDRAULIQUE D'ALIMENTATION D'UN VERIN, NOTAMMENT UTILISE POUR MANOEUVRER UNE PORTE DE SOUTE D'AERONEF**
HYDRAULIKKREISLAUF ZUR BETÄTIGUNG EINES ZYLINDERS, DER INSBESONDERE ZUM BEDIENEN EINER GEPÄCKRAUMTÜR EINES LUFTFAHRZEUGS VERWENDET WIRD
HYDRAULIC CIRCUIT FOR SUPPLYING A CYLINDER, IN PARTICULAR USED TO MANOEUVRE A HOLD DOOR OF AN AIRCRAFT

(30) Priorité: 09.07.2018 FR 1856297
(43) Date de publication de la demande: 15.01.2020
(73) Titulaire: Safran Landing Systems, 78140 Vélizy-Villacoublay (FR)
(72) Inventeur: JUBERT, Xavier, 77550 Moissy-Cramayel (FR); ERNIS, Sébastien, 77550 Moissy-Cramayel (FR)
(74) Mandataire: Lavialle, Bruno François Stéphane

(56) Documents cités:
- EP-A1- 0 503 266
- EP-A1- 2 444 317
- EP-A2- 2 071 195
- EP-A2- 2 740 944

## Description

L'invention concerne un circuit hydraulique d'alimentation d'un vérin, notamment utilisé pour manœuvrer une porte de soute d'aéronef, comme une soute d'atterrisseur, ou encore pour manœuvrer un atterrisseur.

### ARRIERE PLAN DE L'INVENTION

Les portes de soutes d'aéronef sont généralement manœuvrées par un vérin depuis une position ouverte jusqu'à une position fermée dans laquelle les portes sont maintenues verrouillées par un boîtier d'accrochage. Pour ce faire, le vérin continue à tirer sur la porte une fois celle-ci arrivée en position fermée pour la contraindre contre la butée qui définit la position fermée et ainsi la verrouiller dans un état précontraint. Puis l'action du vérin est annulée une fois la porte verrouillée.

Pour ouvrir la porte, on commence par commander la rétraction du vérin pour tirer sur la porte et ainsi faciliter l'ouverture du crochet du boîtier d'accrochage. Puis on commande l'extension du vérin. Pour ce faire, le distributeur qui alimente le vérin passe par une position centrale qui met les deux chambres du vérin au retour, ce qui diminue brutalement la traction qu'exerce le vérin sur la porte. Les précontraintes installées dans la porte par le vérin se libèrent brutalement et propulsent la porte jusqu'à ce que le vérin soit de nouveau pressurisé et reprenne le contrôle de la porte, qui subit ainsi plusieurs rebonds. Ces rebonds induisent des pics de pression dans les chambres du vérin et les tuyauteries associées dommageables à la tenue en fatigue du vérin et de la structure de l'aéronef.

Le document EP 0 503 266 décrit un circuit hydraulique d'alimentation d'un vérin selon le préambule de la revendication 1.

### OBJET DE L'INVENTION

L'invention vise à proposer un circuit hydraulique d'alimentation d'un vérin qui diminue le risque de rebond de la charge attelée au vérin, au cas où cette charge serait propulsée par la libération soudaine de contraintes, ou par son propre poids lors de l'inversion du sens de déplacement du vérin.

### PRESENTATION DE L'INVENTION

En vue de la réalisation de ce but, on propose un circuit hydraulique d'alimentation pour un vérin comportant des première et seconde chambres, le circuit comprenant un distributeur à tiroir mobile entre des première et seconde positions extrêmes de part et d'autre d'une position centrale stable pour :
- dans la position centrale, connecter les chambres du vérin à un port de retour du distributeur ;
- dans la première position extrême, connecter la première chambre à un port d'alimentation du distributeur et la seconde chambre au port de retour ;
- dans la seconde position extrême, connecter la seconde chambre au port d'alimentation, la première chambre étant connectée soit au port d'alimentation, soit au port de retour.

Selon l'invention, le circuit hydraulique comporte des moyens de maintien de pression pour maintenir la pression dans la première chambre du vérin quand le tiroir passe par la position centrale lorsqu'il est déplacé de la première position extrême vers la seconde position extrême.

Ainsi, après avoir tiré sur la charge pour la précontraindre afin de faciliter son déverrouillage, les moyens de maintien de pression empêchent la première chambre du vérin de se dépressuriser brutalement au passage du tiroir du distributeur par la position centrale, maintenant ainsi un contrôle sur la charge. Les précontraintes peuvent se relâcher progressivement sans provoquer de départ brutal de la charge, diminuant le risque de rebond de celle-ci.

Selon l'invention, les moyens de maintien de pression comprennent une vanne disposée sur une ligne agencée pour connecter le distributeur à la première chambre, la vanne comportant un tiroir mobile entre une position fermée et une position ouverte vers laquelle le tiroir est rappelé par un ressort, la vanne comportant au moins deux chambres de pilotage, dont une chambre d'ouverture agencée pour être connectée à la seconde chambre du vérin et une chambre de fermeture agencée pour être connectée à la première chambre du vérin.

La vanne est ainsi placée en position fermée quand le tiroir du distributeur est dans la première position extrême, maintenant la première chambre du vérin sous pression alors que le distributeur passe par la position centrale lors de sa transition de la première position extrême à la seconde position extrême. Puis la vanne s'ouvre progressivement sous l'action du ressort quand la seconde chambre du vérin est mise en pression.

### DESCRIPTION DES FIGURES

L'invention sera mieux comprise à la lumière de la description qui suit d'un mode particulier de réalisation de l'invention, en référence aux figures des dessins annexés, parmi lesquelles :
- La figure 1 est un schéma hydraulique montrant l'alimentation d'un vérin de manœuvre de porte au moyen d'un circuit hydraulique selon l'invention ;
- La figure 2 est un chronogramme montrant divers paramètres de fonctionnement du circuit hydraulique de l'invention lors des phases d'ouverture et de fermeture de la porte, dont :
   - la pression dans la chambre de rentrée du vérin ;
   - la pression dans la chambre de sortie du vérin ;
   - la pression dans la chambre de fermeture de la vanne des moyens de maintien en pression ;
   - la pression dans la chambre d'ouverture de la vanne des moyens de maintien en pression ;
   - la position du tiroir de la vanne des moyens de maintien en pression ;

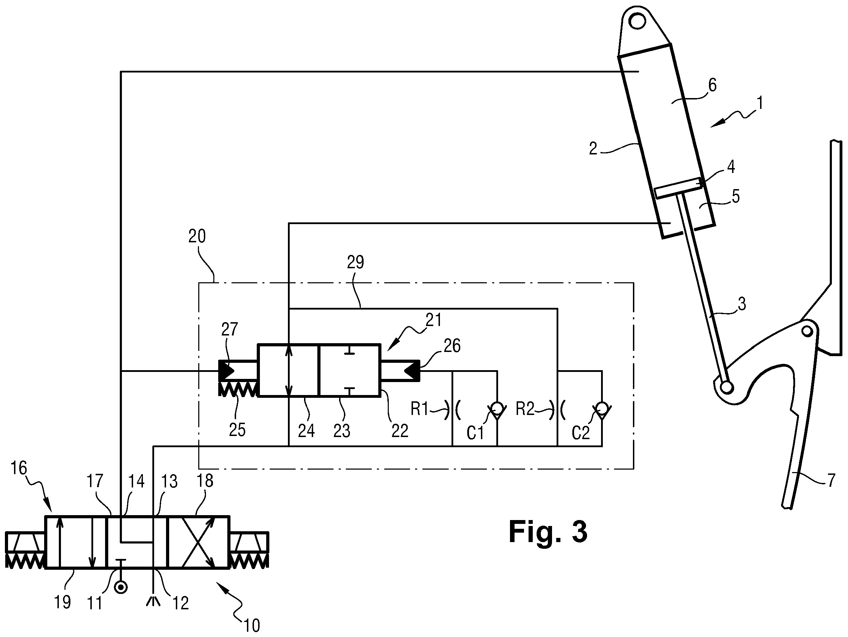

- la figure 3 est un schéma hydraulique montrant une variante de réalisation de l'invention ;

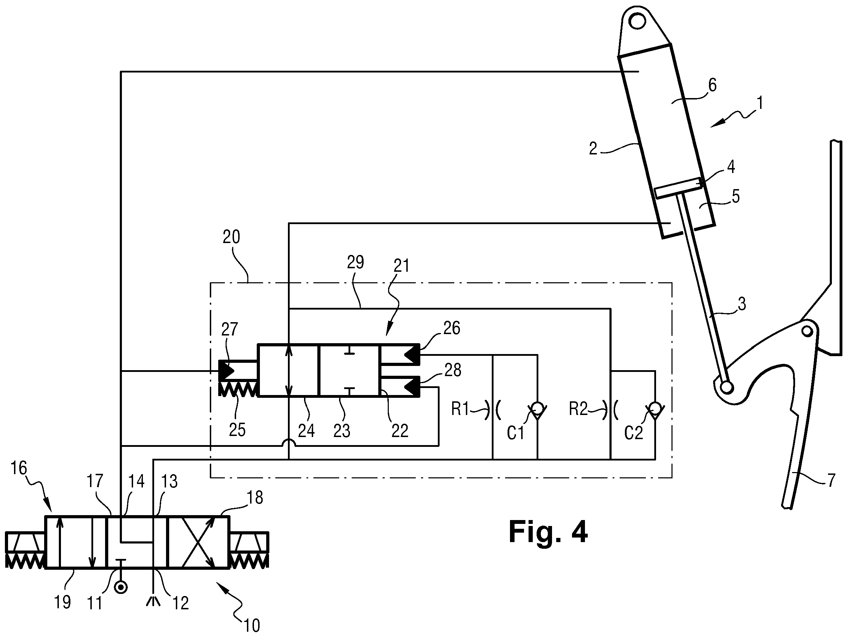

- la figure 4 est un schéma hydraulique montrant une autre variante de réalisation de l'invention.

### DESCRIPTION DETAILLEE DE L'INVENTION

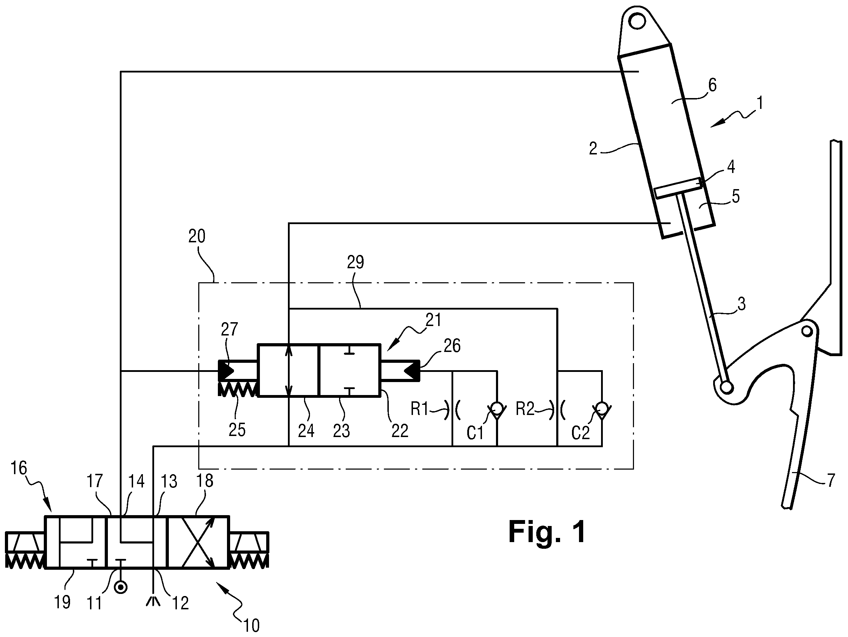

Le schéma hydraulique illustré à la figure 1 concerne l'alimentation en fluide hydraulique d'un vérin 1 comportant un corps 2 dans lequel une tige 3 coulisse en étant associée à un piston 4 qui définit dans le corps 2 une première chambre ou chambre de rentrée 5 (ici la chambre annulaire) et une seconde chambre ou chambre de sortie 6 (ici la chambre pleine). Le vérin 1 sert par exemple à manœuvrer une porte 7 de soute d'atterrisseur d'aéronef. La porte est ici fermée quand la tige 3 du vérin est en position rentrée. Les deux chambres 5,6 du vérin 1 sont alimentées en fluide sous pression grâce à un distributeur 10 comportant un port d'alimentation 11, un port de retour 12, et des ports de service 13,14 respectivement reliés à la chambre de rentrée 5 et la chambre de sortie 6 du vérin 1. Le distributeur 10 comporte un corps dans lequel un tiroir 16 est monté coulissant. Le tiroir 16 est rappelé vers une position centrale stable 17 par des ressorts de centrage. Dans cette position, le tiroir 16 connecte les ports de service 13,14 au port de retour 12 de sorte que les deux chambres 5,6 du vérin 1 sont au retour. Le tiroir 16 peut être déplacé vers des première et seconde positions extrêmes 18,19 de part et d'autre de la position centrale de sorte que :
- dans la première position extrême 18, le port d'alimentation 11 est connecté à la chambre de rentrée 5 et le port de retour 12 est connecté à la chambre de sortie 6, de sorte à tirer sur la porte 7 pour la fermer ;
- dans la seconde position extrême 19, le port d'alimentation 11 est ici connecté aux deux chambres 5, 6 du vérin 1 de sorte à ouvrir la porte. La tige 3 du vérin 1 sort alors par action différentielle de la pression dans les deux chambres 5,6.

La porte 7 est généralement maintenue fermée au moyen d'un crochet d'un boîtier d'accrochage (non représenté) qui crochette une olive de la porte 7 pour maintenir la porte en position précontrainte contre une butée fermée.

Lors d'une séquence d'ouverture de la porte 7, il est connu de commander au préalable le vérin 1 pour qu'il tire sur la porte 7 pour soulager le crochet, facilitant ainsi son désengagement. Une fois la porte 7 déverrouillée, on commande le vérin 1 pour qu'il pousse la porte 7, et ainsi provoque son ouverture. Ainsi, une telle séquence implique que l'on place le tiroir 16 du distributeur 10 dans la première position 18, puis dans la seconde position 19. Cependant, le tiroir 16 passe ainsi par la position centrale 17 et la chambre de rentrée 5 risque d'être brusquement dépressurisée, pour être de nouveau pressurisée quand le tiroir 16 arrive dans la seconde position extrême 19. Pour éviter cet inconvénient, et conformément à l'invention, on insère dans le circuit hydraulique des moyens de maintien de pression 20 dans la chambre de rentrée 5 du vérin lorsque le distributeur 10 transite de la première à la seconde position extrême.

Les moyens de maintien en pression 20 comprennent une vanne 21 disposée sur la conduite reliant le distributeur 10 à la chambre de rentrée 5. La vanne 21 comporte un tiroir 22 mobile entre une position fermée 23 et une position ouverte 24 dans laquelle il est rappelé par un ressort 25. La vanne 21 comporte deux chambres de pilotage antagonistes pour le déplacement du tiroir mobile 22, (représentées par le symbole normalisé en triangle noir), dont une chambre de fermeture 26 connectée au port de service 13 qui est relié à la chambre de rentrée 5 du vérin, et une chambre d'ouverture 27 connectée au port de service 14 qui est reliée à la chambre de sortie 6 du vérin.

La connexion entre le port de service 13 du distributeur 10 et la chambre de fermeture 26 de la vanne 21 comporte un restricteur R1 et un clapet anti-retour C1 placés en parallèle, le clapet anti-retour C1 laissant passer le fluide du distributeur 10 vers la chambre de fermeture 26. Enfin, les moyens de maintien en pression 20 comprennent un shunt hydraulique 29 qui connecte directement la chambre de rentrée 5 du vérin au port de service 13 en shuntant la vanne 21 de sorte que la chambre de rentrée 5 peut être alimentée alors que la vanne 21 est fermée. Le shunt 29 comporte un restricteur R2 et un clapet anti-retour C2 placés en parallèle, le clapet-anti retour C2 laissant passer le fluide du distributeur 10 vers la chambre de rentrée 5.

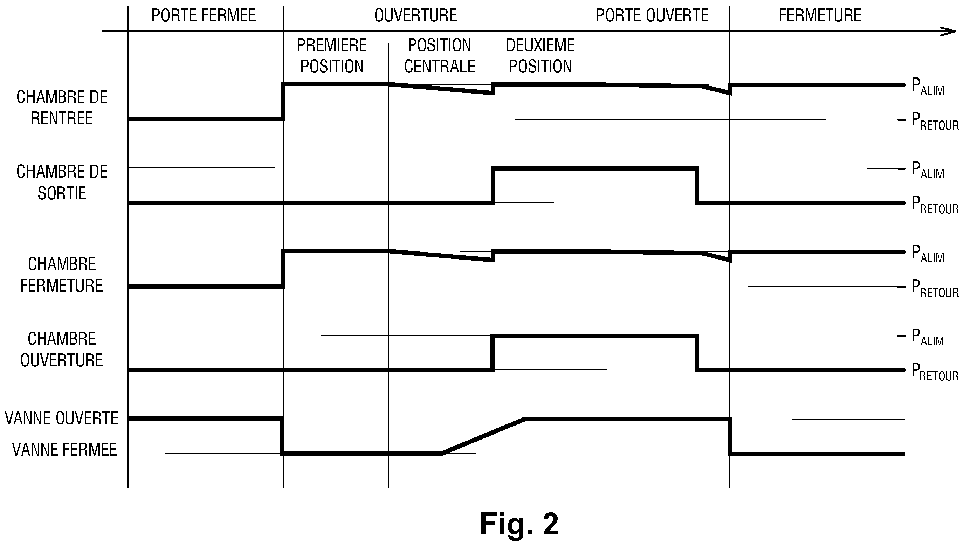

Le fonctionnement du circuit hydraulique de l'invention est maintenant expliqué en relation avec la figure 2, sur lequel sont indiquées, sur l'axe horizontal qui représente le temps, les différentes phases d'une séquence d'ouverture et de fermeture de porte sur un aéronef, dont les phases suivantes :
- Porte fermée. Le tiroir 16 du distributeur 10 est en position centrale 17, les deux chambres 5,6 du vérin 1 sont au retour. La porte 7 est verrouillée. Le tiroir 22 de la vanne 21 a été ramené par son ressort 25 en position ouverte ;
- Ouverture de la porte. Le tiroir 16 du distributeur 10 est tout d'abord amené dans la première position extrême 18, ce qui pressurise la chambre de rentrée 5. Le vérin 1 exerce alors une traction sur la porte 7. Celle-ci est déverrouillée puis le tiroir 16 du distributeur 10 est amené dans la seconde position extrême 19 pour ouvrir la porte 7, avec maintien de la pression dans la chambre de rentrée 5, comme cela sera détaillé plus loin. Le vérin 1 pousse la porte 7 jusqu'à sa position ouverte. Cette phase sera détaillée plus loin ;
- Porte ouverte. Le tiroir 16 du distributeur 10 est maintenu dans la seconde position extrême 19. Les deux chambres du vérin sont pressurisées. Le vérin 1 est en butée sortie ;
- Fermeture de la porte. Le tiroir 16 du distributeur 10 est ramené dans la première position extrême 18, ce qui connecte la chambre de sortie 6 au retour. Comme précédemment, le passage par la position centrale 17 du tiroir 16 ne provoque pas de dépressurisation brutale de la chambre de rentrée 5 Le vérin 1 tire sur la porte 7 et la ramène en position fermée. Le crochet de verrouillage verrouille la porte 7 pour maintenir celle-ci fermée en étant précontrainte contre sa butée fermée. Puis le tiroir 16 du distributeur 10 est ramené en position centrale 17, de sorte que les deux chambres du vérin 1 sont mises au retour.

La phase d'ouverture est maintenant détaillée. Elle est subdivisée en trois sous-phases, définies par la position occupée par le tiroir 16 du distributeur 10. Dans la première sous-phase, le tiroir 16 du distributeur 10 est placé dans la première position extrême 18, ce qui pressurise la chambre de fermeture 26 de la vanne 21, qui se ferme à l'encontre de son ressort 25. Le fluide sous pression peut néanmoins s'écouler vers la chambre de rentrée 5 en passant par le shunt 29 via le clapet anti-retour C2. Le vérin 1 exerce donc un effort de traction sur la porte 7 et soulage ainsi le crochet de verrouillage qui peut être désengagé plus facilement.

Dans les sous-phases suivantes, le tiroir 16 du distributeur 10 est déplacé vers la seconde position extrême 19 en passant par la position centrale 17. On constate que quand le tiroir 16 du distributeur 10 est dans la position centrale 17, la pression dans la chambre de rentrée 5 baisse très légèrement du fait du fluide pouvant s'échapper par le restricteur R2 du shunt 29, mais ne s'écroule pas brutalement. Puis quand le tiroir 16 du distributeur 10 arrive dans la seconde position extrême 19, les deux chambres de pilotage 26,27 de la vanne 21 sont alors mises en equipression. Les forces de pression sur le tiroir 22 de la vanne 21 s'équilibrent et le tiroir 22 revient progressivement sous l'action du ressort 25 vers la position ouverte. Le restricteur R1 ralentit ce mouvement de retour pour assurer une ouverture progressive de la vanne 21, comme illustré. Les deux chambres 5,6 du vérin sont alors sous pression et le vérin 1 pousse la porte, par action différentielle de la pression dans chacun des chambres. En attendant que la vanne 21 soit ouverte, du fluide peut quand même sortir de la chambre de rentrée 5 par le restricteur R2.

Ainsi, grâce aux moyens de maintien en pression de l'invention, la chambre de rentrée 5 du vérin n'est jamais dépressurisée brutalement lors de la transition du tiroir 16 du distributeur 10 d'une position extrême à l'autre en passant par la position centrale, évitant ainsi tout rebond de la porte et tout pic de pression dans le circuit.

L'invention est susceptible de variantes de réalisation. Sur les figures 3 et 4, on fait fonctionner le vérin 1 de façon non différentielle pour la sortie de la tige 3. Comme illustré à la figure 3, on utilise un distributeur 10 dont le tiroir, dans la seconde position extrême 19, connecte non pas les deux chambres 5, 6 du vérin au port d'alimentation 11, mais uniquement la chambre de sortie 6, la chambre de rentrée 5 étant alors connectée au port de retour 12. Les moyens de maintien en pression vont donc permettre de maintenir la pression dans la chambre de rentrée 5 lors de la transition du tiroir du distributeur, puis, quand la chambre de sortie 6 sera finalement mise en pression, la chambre de rentrée 5 va voir sa pression diminuer progressivement au fur et à mesure de l'ouverture de la vanne 21 ce qui encore une fois évite tout rebond de la charge. Comme illustré à la figure 4, la vanne 21 peut comporter une chambre de pilotage auxiliaire 28 également connectée à la ligne allant du distributeur 10 à la chambre de sortie 6, mais agissant en parallèle de la chambre de fermeture 26.

L'invention n'est pas limitée à ce qui vient d'être décrit mais englobe au contraire toute variante entrant dans le cadre défini par les revendications.

En particulier, bien que dans les exemples illustrés, la charge est verrouillée alors que la tige du vérin est en position rentrée, on peut bien sûr appliquer l'invention à un circuit alimentant un vérin dont la charge est verrouillée alors que la tige est en position sortie. La première chambre sera alors la chambre de sortie, et la seconde chambre sera la chambre de rentrée. En outre, l'invention s'applique également à un vérin à double tige.

## Revendications

1. Circuit hydraulique d'alimentation pour un vérin (1), le circuit comprenant un distributeur (10) à tiroir (16) mobile entre des première et seconde positions extrêmes (18,19) de part et d'autre d'une position centrale (17) stable pour :
- dans la position centrale, connecter des première et seconde chambres (5, 6) du vérin à un port de retour (12) du distributeur ;
- dans la première position extrême (18), connecter la première chambre (5) à un port d'alimentation (11) du distributeur et la seconde chambre (6) au port de retour ;
- dans la seconde position extrême (19), connecter la seconde chambre (6) au port d'alimentation, la première chambre (5) étant connectée soit au port d'alimentation, soit au port de retour ;
le circuit hydraulique comportant des moyens de maintien de pression (20) pour maintenir la pression dans la première chambre du vérin quand le tiroir passe par la position centrale lorsqu'il est déplacé de la première position extrême vers la seconde position extrême, les moyens de maintien de pression comprenant une vanne (21) disposée sur une ligne agencée pour connecter le distributeur (10) à la première chambre (5), **caractérisé en ce que** la vanne comporte un tiroir (22) mobile entre une position fermée et une position ouverte vers laquelle le tiroir est rappelé par un ressort (25), la vanne comportant deux chambres de pilotage, dont une chambre de fermeture (26) agencée pour être connectée à la première chambre du vérin (5) et une chambre d'ouverture (27) agencée pour être connectée à la seconde chambre du vérin (6).

2. Circuit selon la revendication 1, dans lequel un shunt (29) est agencé pour s'étendre entre le distributeur (10) et la première chambre (5) pour alimenter cette chambre en fluide sous pression lorsque le tiroir (16) du distributeur est dans la première position extrême et la vanne (21) est fermée.

3. Circuit hydraulique selon la revendication 2, dans lequel le shunt (29) comporte un clapet anti-retour (C2) agencé pour laisser passer le fluide vers la chambre du vérin et un restricteur (R2) en parallèle du clapet anti-retour (C2) .

4. Circuit hydraulique selon la revendication 1, dans lequel la chambre de fermeture (26) de la vanne (21) est reliée au distributeur (10) par une connexion comportant un clapet anti-retour (C1) laissant passer le fluide vers la chambre de fermeture et un restricteur (R1) en parallèle du clapet anti-retour (C1).

## Patentansprüche

1. Hydraulischer Versorgungskreis für einen Zylinder (1), wobei der Kreis ein Verteilerventil (10) mit einem Schieber (16) umfasst, der zwischen ersten und zweiten Endpositionen (18, 19) zu beiden Seiten einer stabilen zentralen Position (17) beweglich ist, um
- in der zentralen Position erste und zweite Kammern (5, 6) des Zylinders mit einer Rücklauföffnung (12) des Verteilerventils zu verbinden;
- in der ersten Endposition (18) die erste Kammer (5) mit einer Versorgungsöffnung (11) des Verteilerventils und die zweite Kammer (6) mit der Rücklauföffnung zu verbinden;
- in der zweiten Endposition (19) die zweite Kammer (6) mit der Versorgungsöffnung zu verbinden, wobei die erste Kammer (5) entweder mit der Versorgungsöffnung oder mit der Rücklauföffnung verbunden ist;
wobei der hydraulische Kreis Druckhaltemittel (20) zum Halten des Druckes in der ersten Kammer des Zylinders umfasst, wenn der Schieber die zentrale Position durchläuft, wenn er von der ersten Endposition in die zweite Endposition bewegt wird, wobei die Druckhaltemittel ein Ventil (21) umfassen, das auf einer Leitung angeordnet ist, die ausgebildet ist, um das Verteilerventil (10) mit der ersten Kammer (5) zu verbinden, **dadurch gekennzeichnet, dass** das Ventil einen Schieber (22) umfasst, der zwischen einer geschlossenen Position und einer offenen Position beweglich ist, in die der Schieber durch eine Feder (25) rückgestellt wird, wobei das Ventil zwei Steuerkammern umfasst, darunter eine Schließkammer (26), die ausgebildet ist, um mit der ersten Kammer (5) des Zylinders verbunden zu werden, und eine Öffnungskammer (27), die ausgebildet ist, um mit der zweiten Kammer (6) des Zylinder verbunden zu werden.

2. Kreis nach Anspruch 1, bei dem ein Nebenschlusswiderstand (29) so angeordnet ist, dass er sich zwischen dem Verteilerventil (10) und der ersten Kammer (5) erstreckt, um diese Kammer mit Druckfluid zu versorgen, wenn der Schieber (16) des Verteilerventils in der ersten Endposition und das Ventil (21) geschlossen ist.

3. Hydraulischer Kreis nach Anspruch 2, bei dem der Nebenschlusswiderstand (29) ein Rückschlagventil (C2) umfasst, das ausgebildet ist, um das Fluid in Richtung der Kammer des Zylinders durchzulassen, sowie eine Drossel (R2) parallel zum Rückschlagventil (C2).

4. Hydraulischer Kreis nach Anspruch 1, bei dem die Schließkammer (26) des Ventils (21) mit dem Verteilerventil (10) über eine Verbindung verbunden ist, die ein Rückschlagventil (C1) umfasst, welches das Fluid in Richtung der Schließkammer durchlässt, sowie eine Drossel (R1) parallel zum Rückschlagventil (C1).

## Claims

1. Hydraulic supply circuit for a cylinder (1), the circuit comprising a distributor (10) with a slide (16) that can move between first and second extreme positions (18, 19) on either side of a stable central position (17) in order to:
- in the central position, connect first and second chambers (5, 6) of the cylinder to a return port (12) of the distributor;
- in the first extreme position (18), connect the first chamber (5) to a supply port (11) of the distributor and the second chamber (6) to the return port;
- in the second extreme position (19), connect the second chamber (6) to the supply port, the first chamber (5) being connected either to the supply port or to the return port;
the hydraulic circuit comprising pressure maintenance means (20) for maintaining the pressure in the first chamber of the cylinder when the slide passes through the central position when being moved from the first extreme position towards the second extreme position, the pressure maintenance means comprising a valve (21) arranged on a line provided for connecting the distributor (10) to the first chamber (5), **characterised in that** the valve comprises a slide (22) that can move between a closed position and an open position, to which the slide is returned by a spring (25), the valve comprising two control chambers, namely one closing chamber (26) designed to be connected to the first chamber of the cylinder (5) and one opening chamber (27) designed to be connected to the second chamber of the cylinder (6).

2. Circuit according to claim 1, wherein a shunt (29) is arranged so as to extend between the distributor (10) and the first chamber (5) in order to supply said chamber with pressurised fluid when the slide (16) of the distributor is in the first extreme position and the valve (21) is closed.

3. Hydraulic circuit according to claim 2, wherein the shunt (29) comprises a non-return valve (C2) provided for allowing the fluid to flow towards the chamber of the cylinder and a restrictor (R2) in parallel with the non-return valve (C2).

4. Hydraulic circuit according to claim 1, wherein the closing chamber (26) of the valve (21) is connected to the distributor (10) via a connection comprising a non-return valve (C1) that allows the fluid to flow towards the closing chamber and a restrictor (R1) in parallel with the non-return valve (C1).
